# EUROPEAN PATENT SPECIFICATION

(11) **EP 3 852 523 B1**
(45) Date of publication and mention of the grant of the patent: **10.05.2023**
(21) Application number: 19779361.5
(22) Date of filing: 23.09.2019
(51) Int. Cl.: A01M 23/08

(54) **BAIT STATION**
KÖDERSTATION
POINT D'APPÂT

(30) Priority: 21.09.2018 DK PA201870619; 16.04.2019 DK PA201970239
(43) Date of publication of application: 28.07.2021
(73) Proprietor: Falkenhard Gyldenkilde Holding ApS, 8700 Horsens (DK)
(72) Inventor: GYLDENKILDE, Susan Irene Helletofte, 8700 Horsens (DK); FALKENHARD, Ronny, 8700 Horsens (DK)
(74) Representative: Chas. Hude A/S
(86) International application number: PCT/DK2019/050282
(87) International publication number: WO 2020/057709

(56) References cited:
- EP-A1- 3 299 315
- WO-A1-95/20873
- CN-U- 207 167 547

## Description

### FIELD OF THE INVENTION

The invention relates to bait stations and objects with bait stations. Prior art documents in the field are for example CN 207 167 547 U and WO 95/20873 A1.

### BACKGROUND OF THE INVENTION

Pests are a nuisance and can even be unsanitary, bring infectious disease or be dangerous, not least in metropolitan areas. Pests are taken to mean rodents and insects, especially rats. Traps are then used to that can kill pests, such as rats. However, traditional traps are also dangerous to other animals and even humans, and therefore bait stations are commonly used to enclose the trap in a convenient, safe and sanitary manner.

Bait stations are impractical and have the disadvantage of being movable freely by passers-by who may advertently or inadvertently push or kick or take the bait station. Moreover, bait stations are exposed to the elements and compete for the attention of pests with other objects of the urban landscape, such as competing with waste food. In some neighbourhoods, residents or tourist establishments may even be opposed to setting up bait stations as this can be seen as a detriment to real estate values or ruin the mood for potential customers, driving down sales. However, not setting up a bait station is not a solution either, and may be legally required. Therefore, there is needed a bait station that will better blend into the urban landscape.

### SUMMARY OF THE INVENTION

The invention relates to a two-part bait station for attracting pests according to claims 1 to 13. Other disclosure is for information purposes only and does not form an integral part of the invention (even-though saying "according to the invention"). is the aim of the current invention to alleviate at least some of the above-mentioned problems. This is achieved by providing a two-part bait station for attracting pests, such as rodents and especially rats. The bait station comprises an enclosed bait chamber for storing pest poison or a pest trap and a receiving part for removably receiving said bait chamber and said bait chamber during use.

Further, the two-part bait station is formed with an integration frame for at least partly enclosing said two-part bait station, and wherein said integration frame forms at least part of the exposed outer surface of the lower ground-contacting part of an object not primarily being a bait station, such as a waste bin, a step of a staircase or a flower pot.

The bait chamber is formed with access openings and the integration frame is formed with holes, the holes and access openings being positioned in a manner whereby access for a pest is allowed from an outside environment of the integration frame, through said holes and said access openings into the bait chamber, when the bait chamber is accommodated in said receiving part.

Thereby, a seamless bait station is achieved that is easy to service by a pest control technician. Several stationary and movable public and private objects can have the bait station integrated. By using a ground-contacting part of the object, not only is the bait station kept near the rat population as well as many other pests, it is also kept out of view of passers-by.

By the integration frame forming an outer surface of an object, which is not primarily a bait station, is meant that the object has another primary purpose, such as being a waste bin, a flower pot, a step of a staircase.

By having openings in the bait chamber and holes in the integration frame, normal and/or robust bait chambers can be used without regard for their aesthetic qualities, as the bait chamber may be covered.

By ground-contacting part is meant that the bait station is integrated into a part that serves as a plinth or bottom or a foundation of an object. The object protrudes above the ground, and the bait station is installed above ground as part of the object that serves generally another purpose.

The present application claims priority from two applications relating to developments in bait stations, and the phrases between the two prior applications differ slightly. It is generally understood that, where it makes sense to the skilled person, similar entities may be substituted for each other across embodiments despite these variations in names. The drawings especially make the similarities clear.

Generally, the openings in the sidewalls of the bait chamber, which allow pest transport into and out of the bait chamber, have been named access openings and sidewall openings. Where these openings have yet to be fully provided but are instead provided as dotted-line cut-outs for a technician to finalise, they have been named sidewall opening means and/or partly cut openings.

The openings of the integration frame, which allow a pest such as a rat to enter the inner volume of the object and with which the integration frame is integrated - and thus approach the bait chamber - have been named holes. When these have yet to be fully provided but are instead provided as dotted-line cut-outs for a technician to finalise, they have been named partly cut holes.

Receiving frame and bottom cup are both terms that denote what has hitherto been termed the receiving part.

Bottom cup, where used, serves both as receiving part and as integration frame.

These are merely some of the terms that has not overlapped completely, but where the skilled person will no doubt be able to see the similarities.

In an embodiment of the invention, at least part of said integration frame is attached to said bait chamber. Thereby, a seamless bait station is achieved, where the pest control technician accesses the bait station from a side that is further made seamless in the object environment.

In an embodiment of the invention, the bait chamber is adapted to be inserted into said receiving part as a drawer, and the front of said drawer forms at least part of said integration frame as a front surface attached to said bait chamber. Thereby, an even more seamless bait station is achieved, where the pest control technician accesses the bait station from a side that is further made seamless in the object environment. In an embodiment thereof, holes are provided in the front surface of the integration frame, whereby a technician can access the bait chamber from an exposed side that is made seamless to passers-by, while further allowing pests to access the bait chamber from this exposed side.

In an embodiment of the invention, the at least part of said integration frame is attached to said receiving part. Thereby, a periphery is provided that ensures a seamless integration into the object environment, such as providing a bottom cup of a waste bin or plinth or bottom part of a waste bin or flower pot.

In an embodiment of the invention, the holes and access openings are positioned on multiple sides of said two-part bait station providing access for said pest to the bait chamber from said multiple sides of said two-part bait station. Thereby, a pest can access the bait station from at least two sides keeping in mind that the bait station and bait chamber are not necessarily rectangular.

In an embodiment of the invention, at least two of said access openings in said bait chamber are arranged on mutually opposite sidewalls allowing line-of-sight from one side of the bait chamber through the bait chamber to the opposite side of the bait chamber through said two access openings. Thereby, the pest can see through the bait station, and the effectiveness of the bait station has thus been found to be enhanced as the pest feels safer.

In an embodiment of the invention, at least three holes and/or at least three access openings are provided, where these holes and/or access openings are provided as partly cut holes and/or partly cut access openings, formed as dotted or striped cutouts. Thereby, an installation technician can decide, where he wantw to provide openings and holes during installation in the object. This allows increased customisation, such as allowing the technician to take object orientation into account. For example, he can then open wall-facing openings and holes to improve seamless integration in the object environment further. In an embodiment, at least four holes, or at least five holes, or at least six holes, or at least seven holes or at least eight holes are provided as partly cut holes. In an embodiment, at least four access openings, at least five access openings, at least six access openings, at least seven access openings or at least eight access openings are provided as partly cut access openings. In an embodiment, four of each holes and access openings are provided partly cut. In an embodiment, at least five of each, at least six of each, at least seven of each or at least eight of each holes and access openings are provided as partly cut.

In an embodiment of the invention, the bait chamber comprises additional side rooms separated with inner sidewalls and connected via apertures in said inner sidewalls. Thereby, it may be more convenient to place traps within the bait chamber as well as be more comfortable for the pests thus enhancing bait station effectiveness.

In an embodiment of the invention, access tunnels are positioned between at least one of said access openings in said bait chamber and at least part of said holes in said integration frame to guide the pest toward the bait chamber. Thereby, the receiving part may be adapted to fit a standard size bait chamber to a custom size integration frame or a custom size bait chamber to a standard size integration frame, while preventing the pests from accessing the inner volume of the object. This improves standardisation and customisation further.

In an embodiment of the invention, at least one surface of said enclosed bait chamber is a see-through surface. Thereby, a pest may be able to look through the bait chamber while still having to navigate around a wall in the bait chamber thus increasing the bait chamber effectiveness.

In an embodiment of the invention, at least one surface of said enclosed bait chamber is a removable surface. Thereby, a pest control technician is enabled to open the bait chamber and remove a dead pest, such as a rat or rodent, and reset the trap or add more poison.

In an embodiment of the invention, the bait station further comprises a locking mechanism for locking said bait chamber to said receiving part, whereby said bait chamber can only be removed from said receiving part after unlocking said locking mechanism. Thereby, accidental dislodging during object use and tampering with the bait chamber is avoided.

In an embodiment of the invention, the integration frame is for at least substantially enclosing said two-part bait station, and wherein said integration frame forms at least substantially the whole exposed outer surface of the lower ground-contacting part of an object, preferably where said integration frame encloses said two-part bait station, and wherein said integration frame forms the exposed outer surface of the lower ground-contacting part of the object. Thereby, even further seamlessness in the object environment is achieved.

An embodiment of the invention also relates to a bait chamber for a two-part bait station. An embodiment of the invention also relates to a receiving section for a two-part bait station.

### DRAWER-STYLE BAIT STATIONS

The present invention relates to a depot system for pests, such as rats wherein the depot system comprises a drawer unit for accommodating said pests and a receiving frame adapted for receiving said drawer unit, said drawer unit comprises a bottom surface and side surfaces defining an inner area, and said drawer unit is adapted for sliding into said receiving frame. The drawer unit is positioned in said receiving frame, and only a subpart of said side surfaces are accessible from the surroundings of said depot, said accessible subpart of said side surfaces comprises at least one access opening whereby the inner area of said drawer is accessible by a pest via said access openings.

Thereby a depot system is obtained for holding one or more pests, that is inherently aesthetic and can be placed unobtrusively in the environment and will blend in with the surroundings without being perceived as a pest control article. This can be done by integrating the receiving frame in any piece of existing furniture, decoration or existing walls. The drawer unit can then be slid in and out of the receiving frame for maintenance and when slid into the frame, the depot will blend into the surroundings.

Further the depot system is relatively inexpensive and will comply with the desired requirement of being serviceable for removing the trapped pests, activating the trap and placing or retrieving poisoned bait.

Further, the depot system can easily be integrated in objects already present in the environment, such as garbage cans, house walls, flowerpots, sculptures, etc.

In an embodiment said receiving means and said drawer unit comprises mutually engaging locking mechanisms, whereby, when locked, the drawer unit cannot be slid out of said receiving frame.

Thereby the system can be locked to avoid unauthorized access by children and thieves and it is also ensured that no persons are endangered by accessing a trap inside the depot system or poison inside the depot system.

In an embodiment said drawer unit comprises at least one split wall positioned inside inner area, splitting said inner area into subareas.

In an embodiment at least one split wall comprises an access opening enabling pest to move between subchambers.

Thereby guide channels can be created inside the depot system. It is also possible to create specific rooms for specific purposes, maybe even a closed chamber solely for storage of spare parts. The advantage of having channels inside is also that it is avoided that when somebody puts his or her hand into an access opening, he/she cannot get in contact with a trap or poison positioned inside the depot system.

In an embodiment at least some of the access openings in the split walls comprise a blend/cover only accessible by specific pests, e.g. due to their use of their teeth or due to other pest-specific ability.

In an embodiment said drawer further comprises a grid cover positioned parallelly to said bottom covering a least a subpart of said drawer unit.

The grid cover should at least cover the subchamber where the pest is caught, to ensure the pest cannot escape the chamber by climbing up or jumping or flying.

Some or all chambers can be closed so that a potentially caught pest cannot jump out of the drawer, nor when the drawer has been slid out of the receiving frame. At least the chambers to which the pest have access should be covered by such grid cover. Other covers might also be suitable depending on the type of pest, and it is an advantage that when the drawer is slid out of the receiving frame, there is visual access to the inner part of the drawer unit.

In an embodiment, the accessible subpart of said side surfaces of said drawer unit comprises multiple access openings.

Thereby there is an increased chance of pests going into the depot. Further it is possible to make a maze just leading through the depot, e.g. via poison and then out of the depot again to avoid death inside the depot.

Further to create a standard depot system there could as default be added access openings on a number of positions on the side walls; as default these openings are all blinded, and depending on the specific situation or object for which the system are used, the blinds can be removed thereby adapting the depot system to the specific situation.

In an embodiment said drawer further comprises a blocking mechanism which, when activated, blocks at least a subpart of the access openings.

Thereby it is possible to completely close a chamber after catching a pest; maybe a subchamber can be sealed, and the remaining chambers may still be used for further pests.

Further the depot system might not be needed for longer periods of time during which it then is possible to close the access openings to ensure that no animals enter the depot, e.g. for creating a nest.

In an embodiment said blocking system is activated when said drawer unit is slid out of the receiving frame.

In an embodiment said receiving frame is integrated in an object serving another purpose, thereby adding additional functionality to said object.

In an embodiment a front of said drawer unit has a design corresponding to said object whereby the depot system is not immediately visible.

In an embodiment said object is a garbage disposal unit.

In an embodiment said receiving frame and said drawing unit comprises mutually engaging sliding elements facilitating the sliding of said drawer unit in and out of said receiving frame.

The invention further relates to a drawing unit for a depot system according to the above.

The invention further relates to a depot system according to the above.

By the invention according to the claims the following is obtained:
- A depot for holding one or more pests that is inherently aesthetic and can be placed unobtrusively in the environment and will blend in with the surroundings without being perceived as a pest control article.
- A depot that is relatively inexpensive and will comply with the desired requirement of being serviceable for removing the trapped pests, activating the trap, and placing or retrieving poisoned bait.

### INSERTION-STYLE BAIT STATIONS

It is the aim of the current invention to alleviate at least some of the above-mentioned problems. This is achieved by providing a bait station for providing a space for luring pests such as rodents, especially such as rats. The bait station has a cage being elongate with long sidewalls and short sidewalls, the long sidewalls extending along a first axis and the short sidewalls forming two mutually opposite ends spaced apart along said first axis, the cage further having at least two sidewall opening means for pest entry.

Additionally, the bait station has two flanges attached to said cage along the long sides and extending from the cage in opposite directions whereby the bait station is generally X-shaped. The flanges forms roofs being substantially flush with a top surface or lattice of the cage.

The bait station is adapted to fit in a bottom cup of a waste bin, the bottom cup having two parallel horizontal surfaces: an X-shaped bottom surface and a second surface spaced above said X-shaped bottom surface and encircling it. The cage fits on the X-shaped bottom surface and the flanges have sidewall supports extending downward at least to said second surface. Further, the flanges - including the sidewall supports - and either the cage top surface or lattice, form an obstruction to rat travel between the X-shaped bait station and a space above said bait station when said bait station is installed in a waste bin bottom cup.

Thereby, a specially designed bait station is achieved that maximally utilises the space of a waste bin with an X-shaped bottom cavity, while blocking off travel up into the waste bin as well as extending at least slightly into the room above the X-shaped bottom cavity. By extending into the space above the X-shaped cavity, it has been found that the bait station becomes tall enough that rats will use it significantly more. In an embodiment, the sidewall supports are at least 2 cm tall. This has been found to work especially well and to fit within important waste bin assembly constraints.

By providing the bait station being X-shape, side-rooms are achieved that can conveniently house pest traps, thereby allowing two or three traps in a single waste bin. The space is then maximally utilised.

In an embodiment, the flanges may extend to the bottom of the cage, i.e. to the bottom surface of the bottom cup. In an embodiment, the flanges extend to, and are adapted to be supported on the second surface of the bottom cup. By providing a cage with flanges, the whole bait station can be easily produced using traditional sheet metal techniques, such as producing cage, flanges and sidewall supports from a single piece of sheet metal.

Conventional bait stations are too large to fit in many of the waste bins present in the urban landscape.

In an embodiment, the at least two sidewall openings are located in the long sidewalls of said elongate chamber. By providing the sidewall openings in the long sidewalls, it is even more user friendly to service the bait station while allowing maximal usage of the bait station.

In an embodiment where two sidewall openings are provided adjacent on the same long sidewall, the bait station further comprises a partition wall beneath the adjacent flange to separate said two sidewall openings, ensuring that a pest with access to a space beneath the flange has to pass through the cage to gain access to both sidewall openings. Thereby, it is possible to use two openings adjacent each other and still have the pest move through the cage before it has moved through both openings. This brings the pest by the traps and thus improves the efficiency of the bait station.

In an embodiment, the bait station is adapted to fit snugly in a waste bin with an X-shaped bottom section. Thereby the bait station uses the space even more optimally inside the waste bin and has improved part lifetime.

In an embodiment, the bait station is installed in a waste bin with an X-shaped bottom section. Thereby, a user-friendly bait station is achieved that can be hidden away in plain sight where waste bins are located.

In an aspect of the invention, it relates to a waste bin with a bait station according to the invention installed beneath an inner trash receptacle part of the waste bin. Thereby, waste bin with increasing functionality is achieved, namely a user-friendly bait station that is hidden away.

In an aspect of the invention, it relates to a waste bin with an X-shaped bottom section, where a bait station according to the invention installed in said X-shaped bottom section. Thereby, waste bin with increasing functionality is achieved, namely a user-friendly bait station that is hidden away.

### SHORT LIST OF THE DRAWINGS

In the following, example embodiments are described where
Fig. 1A and 1B are top views of an object with a built-in bait station according to the invention,
Figs. 2-12 generally relate to a bait station according to the invention installed as a drawer unit in a ground-adjacent bottom of an object where

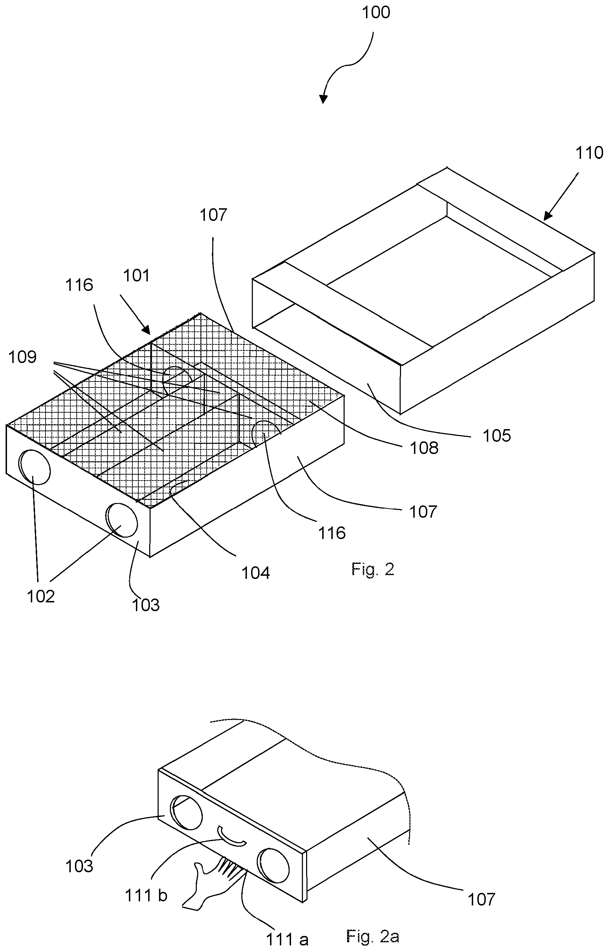

Fig. 2 illustrates an embodiment of a depot system,
Fig. 2a is modification of a part of Fig. 2,

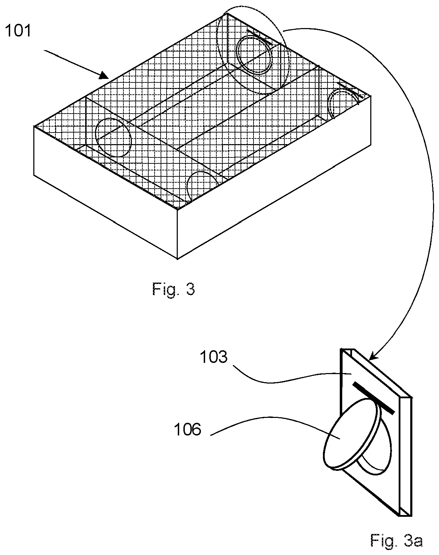

Fig. 3 is an alternative embodiment of the drawer unit of Fig 2,
Fig. 3a is a schematic view of the part marked in Fig. 3,

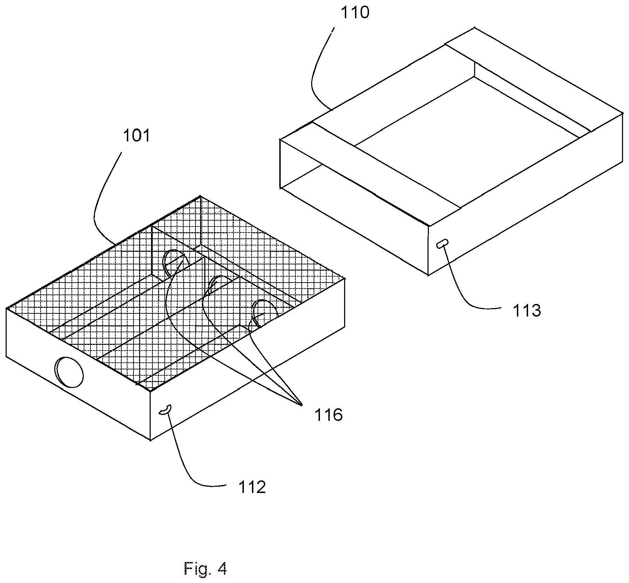

Fig. 4 illustrates still another embodiment of a depot system

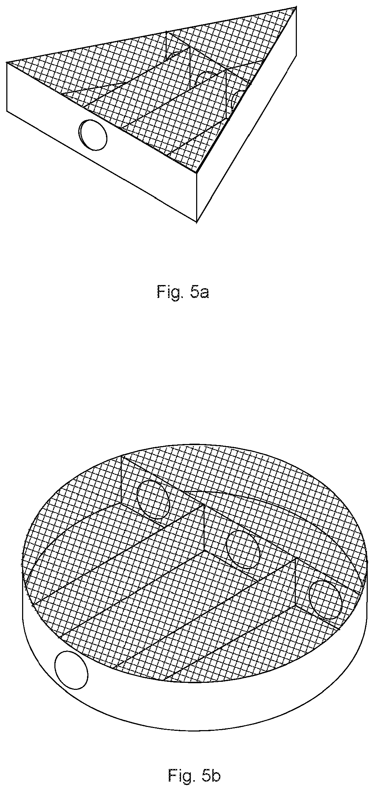

Fig. 5a to 5d illustrates alternative shapes of depot

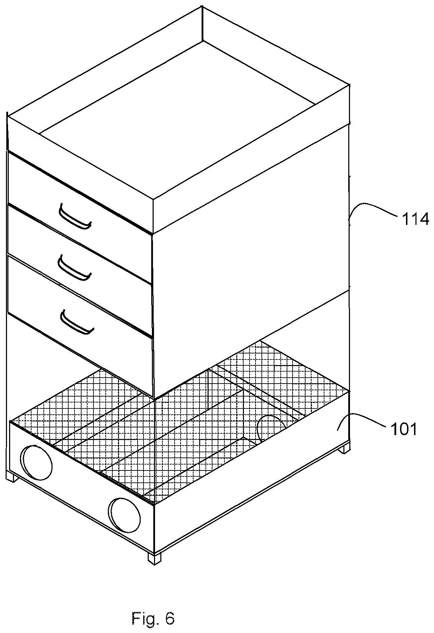

Fig. 6 illustrates a depot system

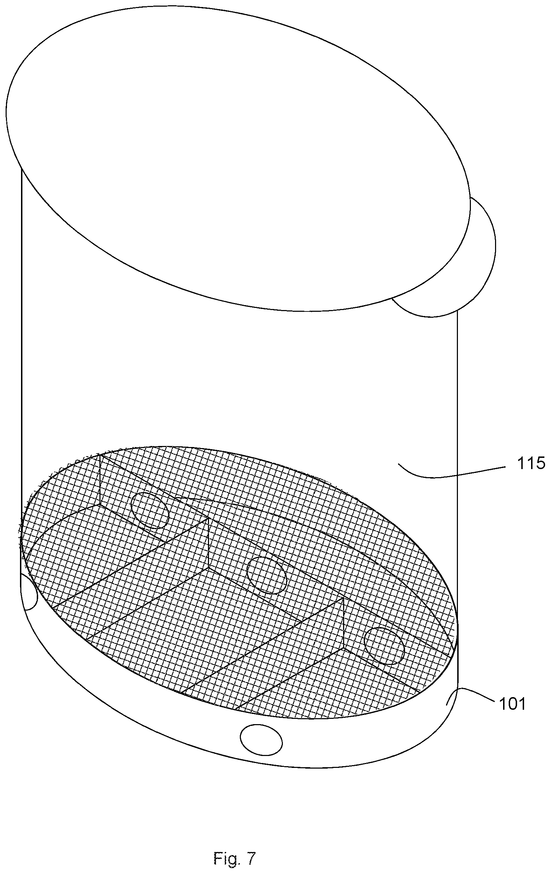

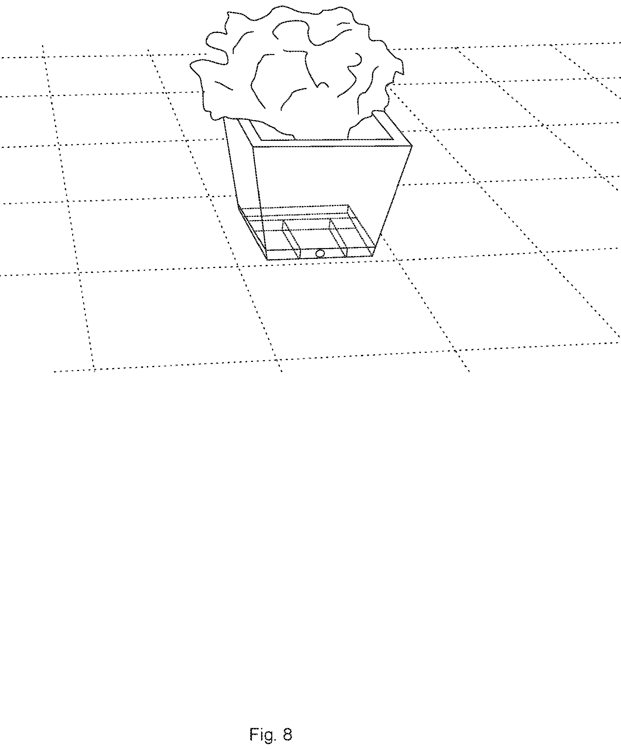

Figs. 7 and 8 illustrate a depot system integrated in another object (garbage disposal unit or flower decoration),

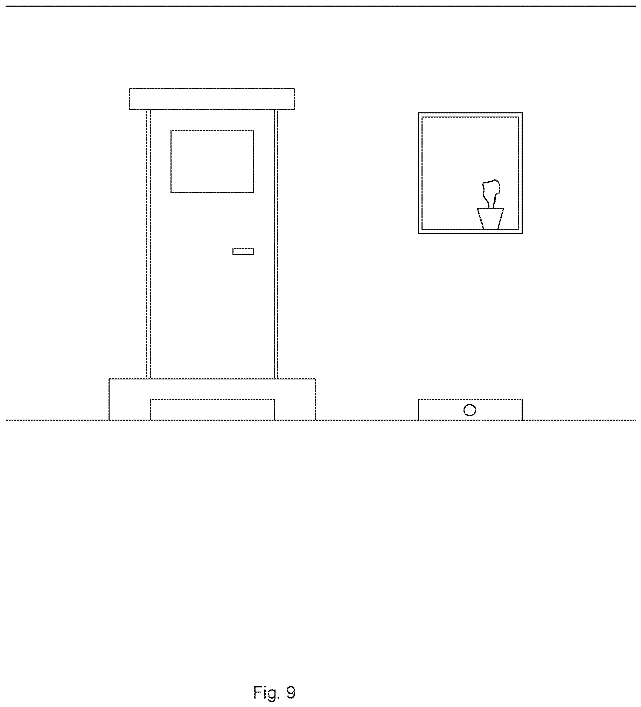

Fig. 9 illustrates a depot integrated into the wall of a house,

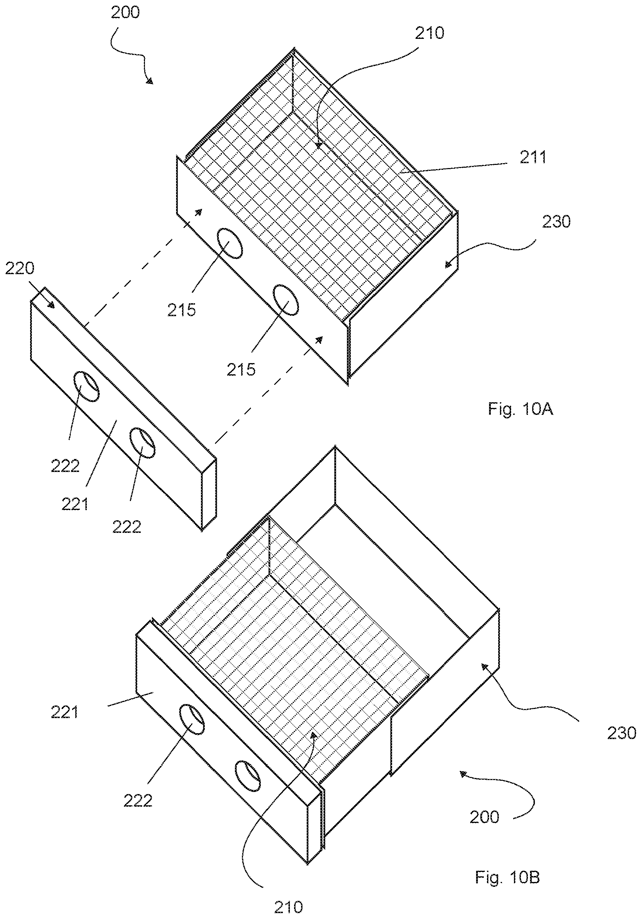

Fig. 10a and 10b illustrate a bait station according to the invention for building into a plinth of a staircase,

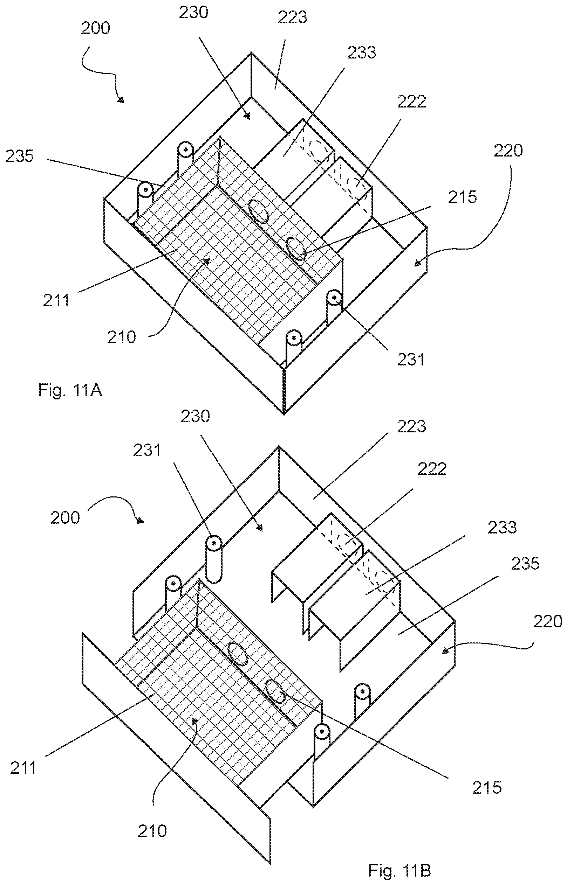

Fig. 11a and 11b illustrate a bait station according to the invention for providing a plinth for a square waste bin,

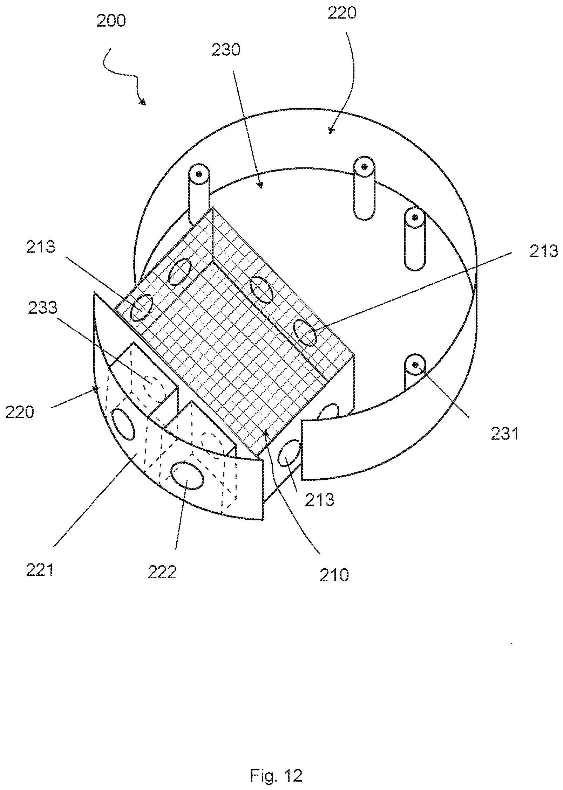

Fig. 12 illustrate a bait station according to the invention for providing a cylindrical plinth for a waste bin,

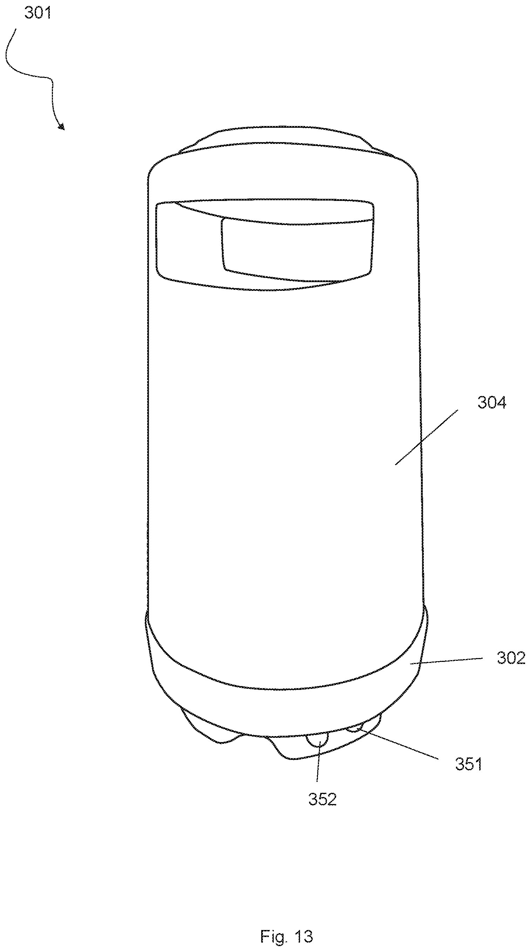

Figs. 13-21 generally relate to a bait station installed in a cylindrical waste bin as a bottom cup according to the invention, where Fig. 13 is a perspective illustration of a waste bin used with a bait station,

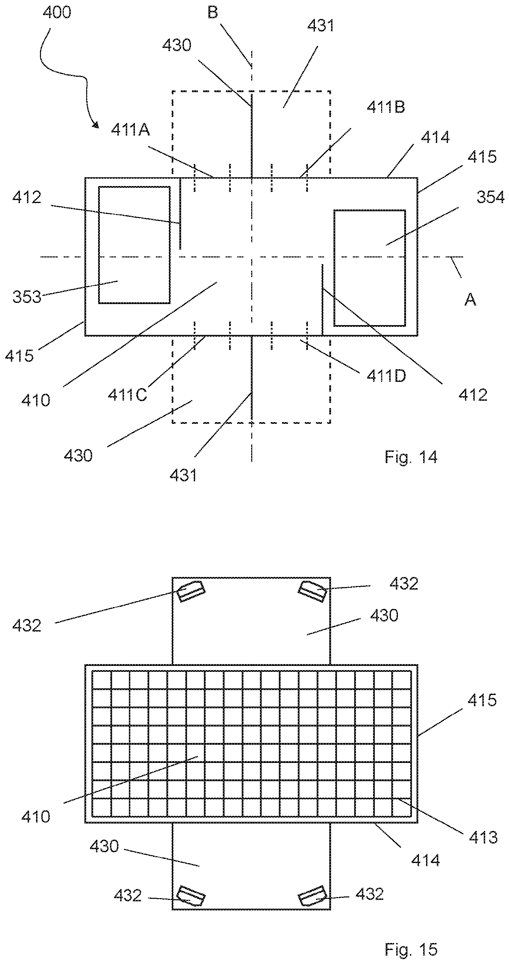

Fig. 14 is cross-sectional schematic view of a bait chamber,
Fig. 15 is a top view of a bait chamber,

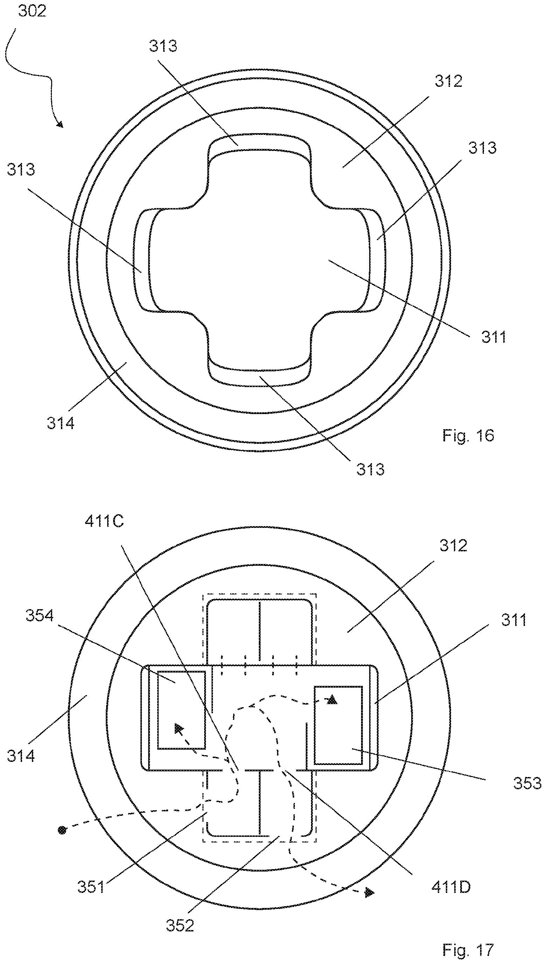

Fig. 16 is a perspective top view of the bottom cup of a waste bin for use with a bait station,
Fig. 17 is a top view of the bait chamber installed in the bottom cup of a waste bin,

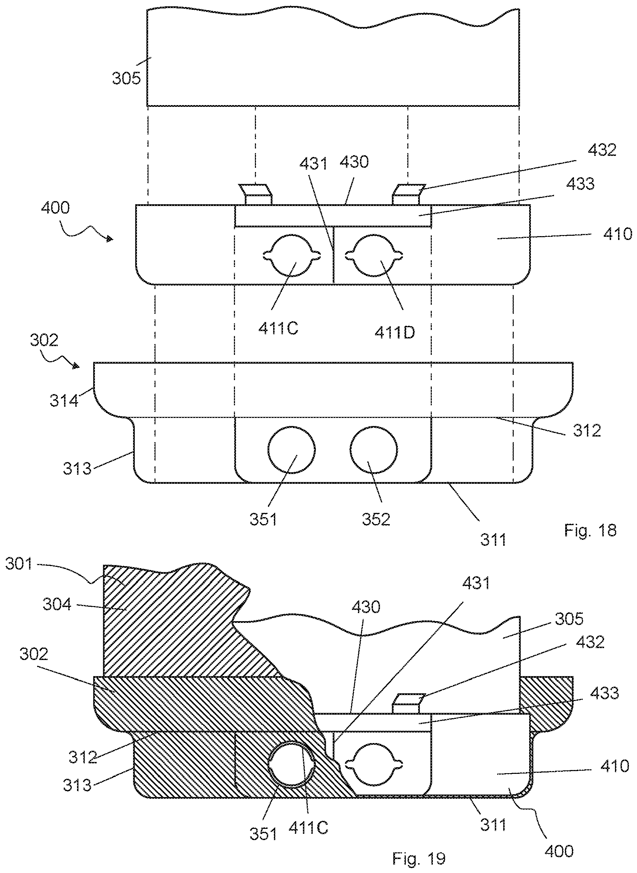

Fig. 18 is an exploded side-view of a bait chamber to be installed in a waste bin bottom cup, and
Fig. 19 is a side-view of a bait chamber installed in a waste bin.

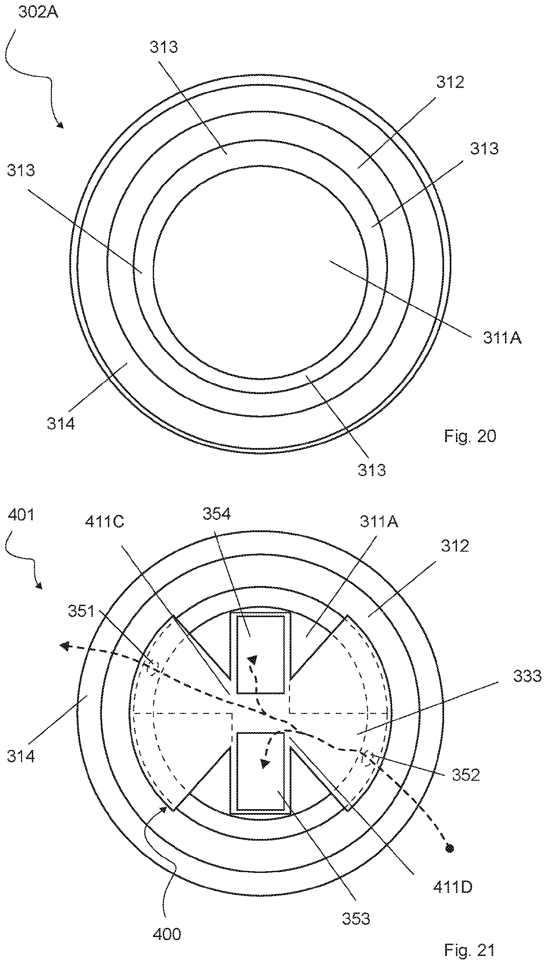

Fig. 20 is a perspective top view of the bottom cup of a waste bin for use with a bait station and
Fig. 21 is a top view of the bait chamber installed in the bottom cup of a waste bin.

### DETAILED DESCRIPTION OF DRAWINGS

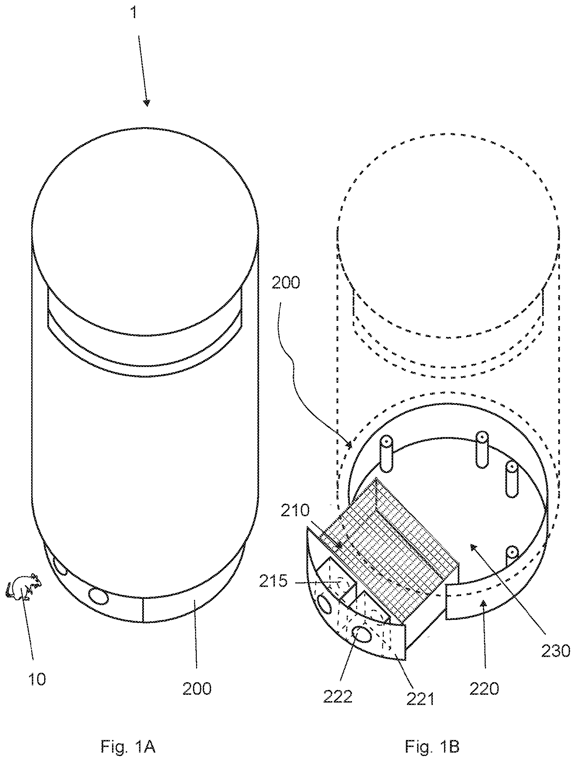

In the following only figures 1A, 1B and 10a to 12 describe embodiments according to the invention of claims 1 to 13. Other embodiments are there for information purposes only and do not form an integral part of the invention (even-though saying "according to the invention").

Fig. 1A illustrates a bait station 200 according to the invention. An object 1, which sits on the ground, is provided. The shown object 1 is a waste bin but in other embodiments, it may be a staircase, a flower pot or other such outdoor object which pests encounter as they rummage public or private spaces and which is adjacent to the ground. The object 1 illustrated has had its plinth substituted for a bait station 200 according to the invention for the attracting pests 10. In other embodiments, the bait station is simply built into a structure, such as the bottom of a single step of a staircase, or the object may be fastened on top of the bait station 200 without removing anything from the object first.

Fig. 1B shows the internals of the bait station 200 provided as a bottom part of the object 1. A bait station 200 is then provided that comprises an integration frame 220 enveloping an internal bait chamber 210, and further where the bait station has a receiving part 230 rigidly forming part of a ground-adjacent part of said object 1. The integration frame 220 presents an exterior look that is similar to an unmodified ground-adjacent part of said object 1 so as to seamlessly allow pest control without taking up public space thus avoiding scaring pedestrians/civilians and ensuring no tampering with the bait station 200. As shown, the integration frame 220 attaches to either or both of the bait chamber 210 and the receiving part 230. When attached to the bait chamber as shown, the integration frame presents a front surface 221 simultaneously as hiding the bait chamber 210. This is performed by the integration frame 210 forming an at least substantially seamless outer surface. One difference between the integration frame 220 and an unmodified ground-adjacent part of an object 1 is the holes 222 provided in the integration frame. These allow a pest, such as a rodent or rat 10 to pass into the object 1 where the removable bait chamber 210 is stored, and the pest can access this bait chamber 210.

The bait chamber 210 is removable from receiving part 230 of the bait station 200. The receiving part 230 is affixed in/to the object 1, and as such, the bait chamber 210 is removable from the object 1. This is provided either through a drawer-like function as shown in Figs. 1A and 1B or by insertion and removal from above to allow a technician to remove the bait station, clean it, and/or remove a dead pest. The integrated frame 210 allows the bait station to be provided in a public or private space seamlessly, because no visible pest traps are needed, and efficiently because the holes 222 are thus provided near the surface of the ground.

Thereby, a bait station 200 is achieved that not only allows seamless integration into an object environment, but also enables easy installation and maintenance. Further, aftermarket installation of a bait station 200 according to the invention is thus allowed, where any drawer-function or insertion/removal is not dependent on the specific installation technique of the technician, since the mutual movement of the receiving part 230 and the bait chamber is an integral part of the bait station 200. Thereby, a seamless and user-friendly bait station 200 is achieved.

### DRAWER-STYLE BAIT STATIONS

Figs. 2-9 further illustrate certain embodiments of the invention. Therein, the depot system 100 is thus a bait station with a bait chamber in the shape of a drawer unit 101 for insertion into a receiving part in the shape of a receiving frame 110. Some of the drawings focus on certain individual parts of the bait station.

Fig. 2 shows a bait station in the shape of a depot system, generally indicated by the reference numeral 100, for pests such as rats, mice and the like.

Typically, the depot system 100 comprises a bait chamber in the shape of a drawer unit 101 for receiving said pests and the receiving frame 110 configured to receive the said drawer unit.

The drawer unit 101 and receiving frame 110 may be of metal, wood, rigid cardboard, fiberglass and any suitable polymeric material, such as high density polyethylene and may be manufactured by any suitable manufacturing process, such as fabrication and/or moulding.

The drawer unit 101 comprises the bottom panel 104 and outer side walls 107, 103 which together define an inner area.

The drawer unit 101 is configured to slide into an opening 108 of said receiving frame 110.

When the said drawer unit 101 in one operative configuration is reposed within the said receiving frame 110 only the side wall 103 is accessible to the surrounding of the depot.

It is envisaged that on this accessible side wall 103 at least one access opening 102 is defined to enable pests in the surroundings to access the inner area within the drawer unit 101 via the opening 102.

Within the inner area of the drawer unit 101 there may be located a pest control article, not shown, but which can be easily understood by one skilled in the art, such as a food substance coated or laced with poison toxic to the pest such as a poisoned pellet or a trap such as a spring loaded trap or any other trap which will prevent the pest from coming out of the drawer unit after the pest has touched the trap.

In one embodiment as seen in Fig. 2, the inner area can be partitioned by inner split dividing walls 109 so that a maze-like structure is formed inside the inner area for conveniently locating the pest trapping article. The split walls 109 also split the inner area into sub-areas or sub-chambers enabling the pests to move between the subareas/subchambers.

The inner walls 109 may also have opening such as 116 configured thereon at suitable locations.

In another embodiment as shown in Figs. 2 and 3, a grid cover 108 is positioned on top of the drawer unit, i.e. at the top of the inner area and parallelly to the said bottom surface 104.

The grid cover 108 may cover the whole or part of the inner area of the said drawer unit and may be rigidly or removably attached thereto.

The apertures of the grid cover 108 can be formed in such a way that through the apertures, the inner area in the drawer unit can be visible, but the pest trapped in the inner area cannot escape through said apertures. This will enable the trapped pests to survive within the said inner area even when trapped.

The cross section of the aperture of the grid cover 108 is therefore configured such that the dimensions are smaller than the pest sought to be trapped in the drawer unit.

Fig. 2a is a cutaway view of an alternative embodiment of the side walls 103. Either the side wall 103 can have a dimension 111a larger than the opening 105 in the receiving frame unit 110 by which the drawer unit 101 can be drawn out from the frame along with the edges of the side wall 103, or a recess handle 111b can be fitted or created on the side wall 103 to enable drawing the drawer unit 101 out of the receiving frame 110.

For certain embodiments, the side wall 103 forms a front surface being a part or a whole of an integration frame.

This operation may be necessary for either setting a trap within the inner area or placing a poison pellet or other article, or for disposing of the pest trapped in the inner area.

One embodiment engaging lock-in mechanism 112, 113, see Fig 4, may be configured between the drawer unit 101 and receiving the frame 110 whereby, when the drawer unit is inserted into the receiving frame and the lock-in mechanisms are engaged, the drawer unit is locked to the receiving frame and cannot be slid out therefrom until the lock-in mechanism is operated.

Another embodiment of the depot system is seen in Fig. 3 and 3A. In this embodiment, the access opening 102 on the side wall 103 can be fitted with a displaceable flap 106. The flap 106 can typically be displaced by the pests from the environment outside the depot system in a one-way manner, i.e. the pests such as rats can enter the inner area through the access opening 102 by displacing the flap 106, but once inside the inner area, the pest is trapped because the pest will not be able to displace the flap 106 from inside of the inner area. This way the pest can be trapped in the inner area with adequate food and water supply but there is no need for it to be poisoned or other ways hurt by an additional trapping mechanism.

It can also be envisaged in one embodiment that the flap 106 can be configured on one of the internal openings 116 which lead into the chambers within the inner area. In this configuration the flap typically acts as a blocking means to block at least one or more chambers within the inner area, thereby trapping the pest which has gained access to the inner area from the outer opening 102, and thereby has been trapped within the inner compartment or chamber.

Fig. 4 shows an alternative configuration of the access opening 102 where only a single opening 102 is configured on the side wall 103.

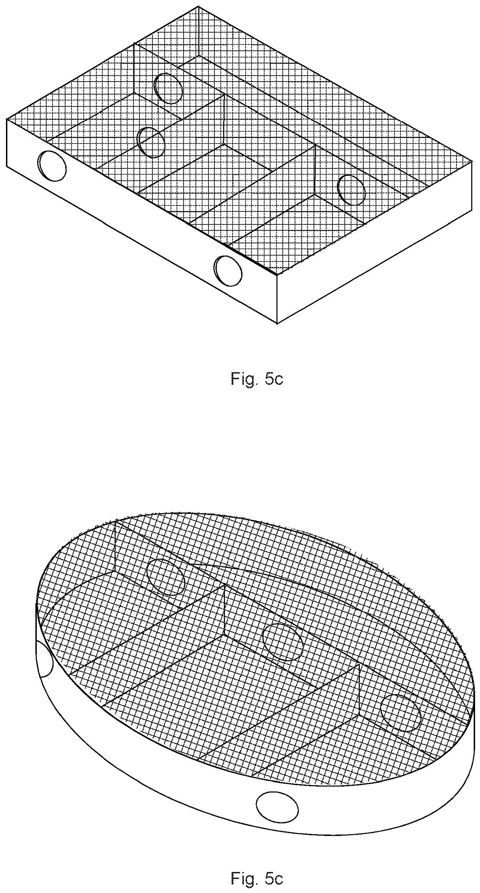

Figs. 5A, 5B, 5C and 5D depict the drawer unit having different shapes.

Especially for insertion-style bait stations, such drawer units, or bait chambers, may be useful.

It is within the ambient scope of the invention that the drawer unit 101 may be configured to allow the pest to enter the drawer unit, consume a poisoned or poisoned laced food and leave the drawer unit and die outside the drawer unit, in which case the drawer unit does not act as a trap and will allow free entry therein and exit therefrom.

What can also be envisaged, as seen in Figs. 6 and 7 in a partial cutaway view of an object is a chest of drawers which serves another purpose of the depot system including the drawer unit 101 and receiving frame 110 which are integrated in the object, thereby adding additional functionality to an object such as a chest of drawers shown in Fig. 6, or the garbage disposal unit shown in Fig. 7. Further examples are where the object is a flower decoration, see Fig. 8, or the wall of a house, see Fig. 9.

In the embodiments shown in Fig. 6-9, the front panel may have a design corresponding to said object such as the chest of drawers or the garbage unit whereby the depot system 100 is not immediately visible.

The configurations shown in Fig. 6-9 illustrate examples of multi-functional objects in which the depot system of the invention is not immediately discernible. The receiving frame is integrated, e.g. as the base of a piece of decoration, or maybe even in the wall of a house, see Fig. 9, and the drawer unit can easily be slid into or out of the receiving frame.

In other words, the bait stations of Figs. 6-9 all have integration frames surrounding the bait chamber and receiving part. This allows seamless pest control without having a discernible and individual pest control station. Thus, the bait station is integrated into the objects of the figures.

In a specific situation, the object might be positioned parallelly to e.g. the walls of a house, and in such a situation there might not be two plane surfaces positioned against each other whereby channels will be introduced between the two wall surfaces which are accessible by the pests such as a rat. The rat might then not be led to the access openings at the sidewall of the depot system. To avoid this problem, the depot system could be mounted with a system ensuring that such channels are blocked, thereby ensuring that the pests cannot enter them, and thereby are forced to run around the depot system via the side surface with the access opening.

Figs. 10A and 10B illustrate a bait station 200 according to the invention suitable for building into a ground-adjacent part of a staircase.

The bait station 200 comprises a bait chamber 210 formed as a box, where the top is a latticed top door 211 allowing a technician to remove a dead rat from the bait station 200, as well as two access openings 215 to allow a pest to enter and leave the bait chamber 210.

To allow installation of the bait station 200 in a staircase, a receiving part 230 is provided that is affixed beneath a step of the staircase. Affixing means may be provided in the receiving part 230, such as holes for screws (not shown). Then, an integration frame 220 has a front surface 221 with holes 222 to allow a pest such as a rat to access the bait chamber 210, as well as a surface material and colour that match seamlessly into the surrounding landscape. By simply removing a vertical panel of a staircase, the bait station 200 according to the invention can thus be installed beneath a step and out of sight. A technician may install the complete bait station 200 as is. In an embodiment, the existing vertical panel can be modified by providing holes 222 in it for it to be used as a front surface 221 of the bait station. This may be advantageous, where the staircase has a surface of a natural material such as wood and has undergone significant weathering, where a new front surface 221 would look out of place.

As can be seen in viewing Figs. 10A and 10B, the bait station 200 takes the shape of a drawer system, where the bait chamber 210 can be drawn out for service and put back into the receiving part 230 afterwards.

Figs. 11A and 11B illustrate a bait station 200 according to the invention suitable for forming a plinth for a square waste bin.

The bait station 200 comprises a bait chamber 210 formed as a box where the top is a latticed top door 211 allowing a technician to remove a dead rat from the bait station 200 as well as two access openings 215 allowing a pest to enter and leave the bait chamber 210.

The receiving part 230 is different from the one described for Fig. 10, because it is fitted for a different purpose. Instead of making the integration frame as small as possible to take up as little space as possible, such as may be beneficial beneath a step of a staircase, it is advantageous in other embodiments to provide a larger receiving part 230 to provide structural strength and conform to the shape of the object of which the bait station becomes a ground-near part, such as a plinth of said object. In the shown embodiment, the receiving part 230 is constructed to receive the bait chamber 210 and structurally conform to the waste bin. An integration frame 220 is then provided that either mimics and replaces an existing waste bin plinth or provides a plinth for a waste bin previously without a plinth. A front surface 221 of the integration frame 220 completes the vertical periphery or plinth wall of the bait station 200 to ensure that the bait station 200 remains a seamless part of the waste bin environment.

Further, the receiving part 230 is provided with fastening means 231 that allow attaching the frame fixedly to the waste bin, so that in use, the bait station 200 becomes useful as an integrated part of the waste bin. If the object is not a waste bin but another object, the same holds true. The shown embodiment uses female threaded standoffs as fastening means 231 located in an integration area 235 of the receiving frame 230. Obviously, other convenient attachment means can be used that are adapted to the use situation of the object environment, such as brackets, glue, welding or snap-fitting.

The holes 222 in the integration frame 220 may be provided in conjunction with an access tunnel 233. When the bait chamber 210 is fully inserted into the receiving part 230, an integration area 235 of the receiving part 230 is barred off thus ensuring that rats or other pests do not make nest here. This further disallows rats or other pests from accessing the upper portions of the object that the bait station 200 is integrated with, such as a waste receptacle of a waste bin.

These access tunnels 233, in combination with the fastening means 231, achieve easy adaptation to a specific object, such as a waste bin with certain measurements in the following manner: The bait chamber 210 is designed to ensure optimal trap or poison accommodation, and over time a certain design may prove useful. A producer may then want to mass-produce these bait chambers 210. When a specific use is presented, such as by a client, the standard size bait chamber 210 may then, in accordance with the invention, be used with a specially designed receiving part 230 and integration frame 220 that on one side fits to the standard size bait chamber 210 and on the other side integrates seamlessly with the object with which to be integrated. This allows a hitherto unseen degree of standardisation - of the bait chamber 210 and part of the receiving part 230 - combined with customisation - of the integration frame 220 and another part of the receiving part 230.

As can be seen in viewing Figs. 11A and 11B, the bait station 200 takes the shape of a drawer system, where the bait chamber 210 can be drawn out for service and put back in the receiving part 230 afterwards.

The bait station 200 may also take various other forms than standard rectangle forms. One useful example of this is shown in Fig. 12.

Fig. 12 illustrates a bait station according to the invention for providing a cylindrical bottom part for a waste bin.

As is the case for the bait station 200 shown in Figs. 11A and 11B, the outer shape of the integration frame 220 and the shape of the bait chamber 210 do not match. Instead, the integration frame 220 is cylindrical and attaches to a waste bin above through fastening means 231. The front surface 221 of the integration frame 220 provides a substantially seamless appearance relative to the rest of the outer surface of the integration frame 220 and to the object above as well. The holes 222 of the integration frame 220 is, in the shown embodiment, provided through the front surface 221.

The location of the holes 222 can be any place around the circumference of the object that makes sense once installed. For example, for the embodiment of Fig. 10, the front surface 221 holes 222 are useful because, at least for stairs built into cement or ground, there may be no other exposed surfaces. For other embodiments such as for the bait station shown in Fig. 11, it may be advantageous to be able to access the bait chamber 210 from one side, and for the rats or pests to access the bait chamber 210 from another side, and so holes 222 may be provided in another outside face of the integration frame, such as the illustrated rear surface 223.

In some embodiments, such as the one shown in Fig. 12, the bait chamber 210 may be provided with partly cut inner openings 213 in various sides, where said openings are finally opened to provide access openings 215 depending on the structure of the final bait station 210 or even intended object orientation.

For the shown embodiment, there may originally have been provided eight partly cut inner openings 213, where those facing the front surface 221 have then been broken free to form access openings 215. Three, four, five, six or seven partly cut inner openings 213 may alternatively be provided in other embodiments.

In some embodiments with partly cut inner openings 213, they may be broken free, i.e. opened, with standard tools, such as a screwdriver, a hammer, or other such hand tool. In this manner, the technician can decide during installation which partly cut inner openings 213 to transform into access openings 215. Thereby, the bait chamber 210 may be further standardised, while its use may be further customisable. Providing partly cut inner openings 213 may be accompanied with providing similar partly cut holes in the integration frame 220 (not shown), providing any extra access tunnels between partly cut holes or holes 222 on one end and the openings or partly cut openings 213 of the bait chamber 210 respectively, or by otherwise adapting the bait station 200.

### INSERTION-STYLE BAIT STATIONS

Figs. 13-19 describe in greater detail a two-part bait station using an insertion style bait chamber. In an embodiment, the invention relates to a two-part bait station with an outer cup and an inner insertion-style bait station as described in relation to Figs. 13-19. In the following description of Figs- 13-19, the term 'bait station' as originally used has been substituted with 'bait chamber' to avoid confusion for the reader, but being functionally identical and unaltered.

In the following, a bait chamber 400 is understood to be an insertion style bait chamber.

Fig. 13 is a perspective illustration of a waste bin 301 used with the bait station of the invention. Further drawings will illustrate the placement in greater detail. The shown waste bin 301 is used in public spaces. The shown waste bin 301 is constructed by assembling a bottom cup 302, an inner waste receptacle (not shown) and a top cover 304.

Thus, the waste bin is an object into which the bait station is integrated. By using a bottom cup 302 as a combination receiving unit and integration frame, a bait chamber can then be placed in the specially adapted bottom cup 302.

Using the bait station of the invention, two holes 351, 352 are produced in the bottom cup 302 for pest transport to and from the bait chamber that is located in the bottom X-shaped compartment of the waste bin 301. By providing the bait station in the waste bin 301, pest traps can be hidden in plain view in items that passers-by have come to expect. No individually managed bait stations are thus needed.

Fig. 14 is a cross-sectional schematic of a bait chamber 400 according to the invention. Bait chambers for rats needs to be of a certain size to allow the rat enough room both to manoeuvre and to relax enough to take risks inside it.

The cage 410 is elongate with long sides 414 and short sides 415. Inside, it has it two trap-hiding walls 412 to hide the parts of the trap 353, 354 that the pest does not need to access, only exposing the parts of the trap to the pest that it does need to access. The traps 353, 354 are then provided off to the sides, nearest the short sidewalls 115. This both allows the pest to move through the bait chamber 400 uninterrupted and to place two traps 353, 354 without the activation of one interrupting the usefulness of the other.

In the shown embodiment, four sidewall opening means 411 are provided. These can either be pre-cut openings, or they can be prepared to allow the installing technician to 'pop out' the openings 411 they desire to use. In that way, the bait chamber 400 can be allowed to run between any of the openings 411 depending on what is convenient based on waste bin placement and orientation.

Attached to the cage 410 are flanges 430. The flanges 430 are marked with dashed lines, since they are not actually visible in the shown cut, however it is illustrative to see how they are located relative to the cage 410. The flanges 430 are attached to the cage 410 and form beneath them essentially antechambers to the cage 410 for the pest, increasing the effective bait chamber 400 size. The flanges 430 have partition walls 431 to ensure the pest must pass through the cage 410 to get out of the bait chamber 400. For example, if a technician decides to use 411C and 411D and cuts two holes in the waste bin cup (not shown) to match, this combination still forces the pest through the cage 410.

Fig. 15 is a top view of a bait chamber 400 according to the invention. In this view, the lattice 413 of the cage 410 is shown as well as two flanges 430 attached to the cage 410 long sides 414.

The flanges 430 form roofs over compartments beneath, i.e. where the pests move in the bait station 100. They are affixed to the cage long sidewalls 414.

Rat-sized pests cannot pass through the lattice 413 to the waste above it or to make nest in the waste bin above. Furthermore, the flanges 430 ensure that the rat-sized pest cannot move up to the waste here either. Thereby a complete partitioning is ensured between the bottom of the waste bin - now forming an integrated bait chamber 400 - and the compartment above having the inner waste receptacle.

If a different pest is envisioned as the target pest of the bait station, a different aperture lattice is used.

The flanges 430 further have receptacle guides 432 for aligning the inner waste receptacle better tin the waste bin. This ensures that the inner waste receptacle is both better located in the waste bin, as well as better attached during use. This eases maintenance since less waste falls between the inner waste receptacle and the top cover. Furthermore, the inner waste receptacle is tossed around less in the waste bin, increasing parts lifetime.

Thus, the bait station has attachment means similar to fastening means described in association with Figs. 11-12.

Fig. 16 is a perspective top view of the bottom cup 302.

The bottom cup 302, being provided with custom holes, generally serves as both integration frame and receiving part.

The bottom cup is moulded in one piece which forms several surfaces. The bottom cup generally has an X-shaped bottom compartment delineated by an X-shaped bottom surface 311 which touches the ground beneath the waste bin, and a bottom sidewall 313. The bottom cup further has a second surface 312 which is raised from the X-shaped bottom surface 311 and, in the art, supports the inner waste receptacle (not shown). The two surfaces 311, 312 are parallel. The bottom cup 302 further has a cylindrical compartment above the X-shaped compartment. The cylindrical compartment is delineated by the second surface 312 and a cup sidewall 314 for attaching and securing the top cover (attachments not shown).

Fig. 17 is a top view of the bait chamber t installed in the bottom cup 302. Holes 351, 352 have been cut in the cup bottom sidewall, giving pests access to the space beneath the flange 430. Sidewall opening means 411C and 411D have been cut out, further giving the pests access to the inside of the cage including to the traps 353, 354.

Flanges 430 enclose the space beneath it by slightly overlapping the X-shaped bottom surface, enclosing the bait station along the second surface 312. Sidewall supports (not shown) extend down from the flanges to be supported on the second surface 312. This means that at least rat-sized pests are never allowed to move up out of the bait chamber 400 into a space above it in the waste bin.

Fig. 18 is an exploded side-view of a bait chamber 400 to be installed in a waste bin bottom cup 302. An inner waste receptacle 305 is partially shown. The inner waste receptacle is guided to its rest position by receptacle guides 432.

The height of the bait station including bait chamber 400 and bottom cup 302, including the sidewall supports 433 is here shown more clearly. As previously described, the bait chamber 400 has a cage 410 with sidewall opening means 411C, 411D being here partially cut openings that can be twisted out as desired. The bait chamber 400 further has flanges 430. The shown flange 430 has a partition wall 431 between the sidewall opening means 411 and further has receptacle guides 432 for securely receiving the inner waste receptacle to stand on the bait chamber 400. The flanges 430 further have sidewall supports 433. When the bait chamber 400 is placed in the waste bin bottom cup 302, the bait station is formed and is slightly taller than the X-shaped compartment, and protrudes into the cylindrical compartment above. As the bottom of the cage 410 rests against the cup bottom surface 311, the sidewall supports 433 rests against the second surface 312. The top of the cage 410 and the flanges 430 then are raised relative to the second surface 312. It has been found that with the additional height added by the bait station 410 extending into the cylindrical compartment, the pests are better lured into the bait chamber 400.

Fig. 19 is a partially open side-view of a bait chamber 400 installed in a waste bin 301 bottom cup 302 to form the bait station. The top cover 304 is installed in the bottom cup 302 and the inner waste receptacle 305 is installed in the waste bin 301. As can be seen, the inner waste receptacle is secured by the receptacle guides 432 on top of the bait station. The bait chamber 400 is taller than the height of the X-shaped bottom cavity of the bottom cup 302. In other words, the cage 410 is taller than this bottom cavity, and since the flanges 430 are affixed to the top of the cage 410, they are above the second surface 312 as well. The flanges 430 have sidewall supports 433 extending downwards to be supported by the second surface. In the shown embodiment, the sidewall supports also help enclose the bottom cavity beneath from the cavity above the bait chamber 400. Thereby, at least rats cannot move up to the inner waste receptacle 305.

A hole 351 has been provided in the cup bottom sidewall 313 to allow pest access to the bait chamber 400. A matching sidewall opening means 411C has been supplied in the sidewall of the cage 410.

When installed as seen in fig. 19, the inner waste receptacle 305 is lifted from the second surface 312 on which it normally rests when installed in a waste bin 301 without a bait station 100. This height increase has been found to not require modified parts, but is allowed within the normal parts tolerances.

Figs. 20 and 21 illustrate an embodiment of an insertion style two-part bait station 401 different from the one depicted in the similar Figs. 16-17.

Fig. 20 is a slightly off-centre top perspective view of a bottom cup 302A. The bottom cup 302A has a flat bottom 311A, a bottom sidewall 313 that raises the cup surface from the bottom, then a second surface 312 that is raised relative to the bottom surface 311A, and finally a cup sidewall 314 for enveloping a waste bin top.

Fig. 21 illustrates a different X-shaped bait chamber 400 being part of the bait station 401.

The bait chamber 400 generally has an axis of the X-shape for holding the traps 353, 354, and the other axis of the X-shape for providing access openings 411C. Holes 351, 352 can be provided in the bottom cup 302A to provide access to the cone-shaped access tunnels 333 of the shown embodiment. The shown embodiment provides a strong structural support for the waste bin above as well as a constriction area, where the pests are forced into contact with the traps, while also providing customisation relating to where the bottom cup 302A is cut to provide holes 351, 352. In the shown embodiment, diagonally opposite holes are cut to provide a free view through the bait station which may be advantageous. In other embodiments, the holes may be provided at other convenient locations.

## Claims

1. A two-part bait station (200) for attracting pests (10), such as rodents and especially rats, said bait station comprising:
- an enclosed bait chamber (210) for storing pest poison or a pest trap,
- a receiving part (230) for removably receiving said bait chamber (210) during use,
wherein said two part bait station is formed with an integration frame (220) for at least partly enclosing said two-part bait station (200) and wherein said integration frame (220) forms at least part of the exposed outer surface of the lower ground-contacting part of an object (1) not primarily being a bait station (200), such as a waste bin, a step of a staircase or a flower pot and wherein said bait chamber (210) is formed with access openings (215) and said integration frame (220) is formed with holes (222), the holes and access openings being positioned in a manner whereby they are aligned when the bait chamber (210) is accommodated in said receiving part (230) whereby access for a pest is allowed from an outside environment of the integration frame (220), through said holes (222) and said access openings (215) into the said bait chamber (210), when the bait chamber (210) is accommodated in said receiving part (230).

2. A two-part bait station (200) according to claim 1, wherein at least part of said integration frame (220) is attached to said bait chamber (210).

3. A two-part bait station (200) according to claim 2, wherein said bait chamber (210) is adapted to be inserted into said receiving part (230) as a drawer, and wherein the front of said drawer forms at least part of said integration frame (220) as a front surface (221) attached to said bait chamber (210).

4. A two-part bait station (200) according to claims 1-3, wherein at least part of said integration frame (220) is attached to said receiving part (230).

5. A two-part bait station (200) according to claims 1-4, wherein said holes and access openings are positioned on multiple sides of said two-part bait station providing access for said pest (10) to the bait chamber (210) from said multiple sides of said two-part bait station (200).

6. A two-part bait station (200) according to claims 1-5, wherein at least two of said access openings (215) in said bait chamber (210) are arranged on mutually opposite sidewalls allowing line-of-sight from one side of the bait chamber (215) through the bait chamber (210) to the opposite side of the bait chamber (210) through said two access openings (215).

7. A two-part bait station (200) according to claims 1-6, wherein said at least three holes and/or at least three access openings are provided, and where these holes and/or access openings are provided as partly cut holes and/or partly cut access openings formed as dotted or striped cutouts.

8. A two-part bait station (200) according to claims 1-7, wherein said bait chamber (210) comprises additional side rooms separated with inner sidewalls and connected via apertures in said inner sidewalls.

9. A two-part bait station (200) according to claims 1-8, wherein access tunnels (233) are positioned between at least one of said access openings (215) in said bait chamber (210) and at least part of said holes (222) in said integration frame (220) to guide the pest toward the bait chamber (210).

10. A two-part bait station (200) according to claims 1-9, wherein at least one surface of said enclosed bait chamber (210) is a see-through surface (211).

11. A two-part bait station (200) according to claims 1-10, wherein at least one surface of said enclosed bait chamber (210) is a removable surface (211).

12. A two-part bait station (200) according to claims 1-11 further comprising a locking mechanism for locking said bait chamber (200) to said receiving part (230), whereby said bait chamber (210) can only be removed from said receiving part (230) after unlocking said locking mechanism.

13. A two-part bait station (200) according to any of claims 1-12, wherein said integration frame (220) is for at least substantially enclosing said two-part bait station (200), and wherein said integration frame (220) forms at least substantially the whole exposed outer surface of the lower ground-contacting part of an object (1), preferably where said integration frame (220) encloses said two-part bait station (200), and wherein said integration frame (220) forms the exposed outer surface of the lower ground-contacting part of said object (1).

## Patentansprüche

1. Eine zweiteilige Köderstation (200) zum Anlocken von Schädlingen (10), wie Nagetiere und insbesondere Ratten, jene Köderstation umfassend:
- eine geschlossene Köderkammer (210) zur Aufbewahrung von Schädlingsgift oder einer Schädlingsfalle,
- ein Aufnahmeteil (230) zur abnehmbaren Aufnahme jener Köderkammer (210) während der Verwendung,
wobei jene zweiteilige Köderstation mit einem Integrationsrahmen (220) ausgebildet ist, um jene zweiteilige Köderstation (200) zumindest teilweise zu umschließen, und wobei jener Integrationsrahmen (220) zumindest einen Teil der freiliegenden Außenfläche des unteren, den Boden berührenden Teils eines Objekts (1) bildet, das nicht in erster Linie eine Köderstation (200) ist, wie ein Abfallbehälter, eine Treppenstufe oder ein Blumentopf, und wobei jene Köderkammer (210) mit Zugangsöffnungen (215) ausgebildet ist und jener Integrationsrahmen (220) mit Löchern (222) ausgebildet ist, wobei die Löcher und Zugangsöffnungen so angeordnet sind, wodurch sie ausgerichtet sind, wenn die Köderkammer (210) in jenem Aufnahmeteil (230) untergebracht ist, wodurch der Zugang für einen Schädling von einer äußeren Umgebung des Integrationsrahmens (220), durch jene Löcher (222) und jene Zugangsöffnungen (215) in jene Köderkammer (210) ermöglicht wird, wenn die Köderkammer (210) in jenem Aufnahmeteil (230) untergebracht ist.

2. Eine zweiteilige Köderstation (200) gemäß Anspruch 1, wobei mindestens ein Teil jenes Integrationsrahmens (220) an jener Köderkammer (210) befestigt ist.

3. Eine zweiteilige Köderstation (200) gemäß Anspruch 2, wobei jene Köderkammer (210) angepasst ist, damit sie als Schublade in das Aufnahmeteil (230) einsetzbar ist, und wobei die Front jener Schublade zumindest einen Teil jenes Integrationsrahmens (220) als Frontfläche (221) bildet, die an jener Köderkammer (210) befestigt ist.

4. Eine zweiteilige Köderstation (200) gemäß den Ansprüchen 1 bis 3, wobei zumindest ein Teil jenes Integrationsrahmens (220) an jenem Aufnahmeteil (230) befestigt ist.

5. Eine zweiteilige Köderstation (200) gemäß den Ansprüchen 1-4, wobei jene Löcher und Zugangsöffnungen auf mehreren Seiten jener zweiteiligen Köderstation angeordnet sind, die jenem Schädling (10) Zugang zu der Köderkammer (210) von jenen mehreren Seiten jener zweiteiligen Köderstation (200) ermöglichen.

6. Eine zweiteilige Köderstation (200) gemäß den Ansprüchen 1-5, wobei mindestens zwei jener Zugangsöffnungen (215) in jener Köderkammer (210) an einander gegenüberliegenden Seitenwänden angeordnet sind, die eine Sichtverbindung von einer Seite der Köderkammer (215) durch die Köderkammer (210) zur gegenüberliegenden Seite der Köderkammer (210) durch jene beiden Zugangsöffnungen (215) ermöglichen.

7. Eine zweiteilige Köderstation (200) gemäß den Ansprüchen 1-6, wobei jene mindestens drei Löcher und/oder mindestens drei Zugangsöffnungen bereitgestellt werden, und wobei diese Löcher und/oder Zugangsöffnungen als teilweise geschnittene Löcher und/oder teilweise geschnittene Zugangsöffnungen bereitgestellt werden, die als gepunktete oder gestreifte Ausschnitte ausgebildet sind.

8. Eine zweiteilige Köderstation (200) gemäß den Ansprüchen 1-7, wobei jene Köderkammer (210) zusätzliche Seitenräume umfasst, die durch innere Seitenwände getrennt und über Öffnungen in jenen inneren Seitenwänden verbunden sind.

9. Eine zweiteilige Köderstation (200) gemäß den Ansprüchen 1-8, wobei Zugangstunnel (233) zwischen mindestens einer jener Zugangsöffnungen (215) in jener Köderkammer (210) positioniert sind und in mindestens einem Teil jener Löcher (222) in jenem Integrationsrahmen (220), um den Schädling zur Köderkammer (210) zu leiten.

10. Eine zweiteilige Köderstation (200) gemäß den Ansprüchen 1-9, wobei mindestens eine Oberfläche jener geschlossenen Köderkammer (210) eine durchsichtige Oberfläche (211) ist.

11. Eine zweiteilige Köderstation (200) gemäß den Ansprüchen 1-10, wobei die mindestens eine Oberfläche jener geschlossenen Köderkammer (210) eine abnehmbare Oberfläche (211) ist.

12. Eine zweiteilige Köderstation (200) gemäß den Ansprüchen 1-11, ferner umfassend einen Verriegelungsmechanismus zum Verriegeln jener Köderkammer (200) mit jenem Aufnahmeteil (230), wobei jene Köderkammer (210) erst nach Entriegelung jenes Verriegelungsmechanismus von jenem Aufnahmeteil (230) entfernt werden kann.

13. Eine zweiteilige Köderstation (200) gemäß einem der Ansprüche 1-12, wobei jener Integrationsrahmen (220) dazu dient, zumindest jene zweiteilige Köderstation (200) im Wesentlichen zu umschließen, und wobei jener Integrationsrahmen (220) zumindest im Wesentlichen die gesamte freiliegende Außenfläche des unteren bodenberührenden Teils eines Objekts (1) bildet, vorzugsweise wo jener Integrationsrahmen (220) jene zweiteilige Köderstation (200) einschließt, und wobei jener Integrationsrahmen (220) die freiliegende Außenfläche des unteren bodenberührenden Teils des Objekts (1) bildet.

## Revendications

1. Poste d'appât en deux parties (200) permettant d'attirer les nuisibles (10), tels que les rongeurs et en particulier les rats, ledit poste d'appât comprenant :
- une chambre d'appât fermée (210) permettant de stocker un poison contre les nuisibles ou un piège à nuisibles,
- une partie de réception (230) permettant de recevoir de manière amovible ladite chambre d'appât (210) pendant l'utilisation,
ledit poste d'appât en deux parties étant constitué d'un cadre d'intégration (220) permettant d'englober au moins partiellement ledit poste d'appât en deux parties (200) et dans lequel ledit cadre d'intégration (220) constitue au moins une partie de la surface extérieure exposée de la partie inférieure en contact avec le sol d'un objet (1) qui n'est pas principalement un poste d'appât (200), tel qu'une poubelle, une marche d'escalier ou un pot de fleurs, et dans lequel ladite chambre d'appât (210) présente des ouvertures d'accès (215) et ledit cadre d'intégration (220) présente des orifices (222), les orifices et les ouvertures d'accès étant positionnés de telle manière qu'ils sont alignés lorsque la chambre d'appât (210) est logée dans ladite partie de réception (230), permettant ainsi à un nuisible d'accéder, depuis un environnement extérieur du cadre d'intégration (220) et à travers lesdits orifices (222) et lesdites ouvertures d'accès (215), à l'intérieur de ladite chambre d'appât (210), lorsque la chambre d'appât (210) est logée dans ladite partie de réception (230).

2. Poste d'appât en deux parties (200) selon la revendication 1, dans lequel au moins une partie dudit cadre d'intégration (220) est fixée à ladite chambre d'appât (210).

3. Poste d'appât en deux parties (200) selon la revendication 2, dans lequel ladite chambre d'appât (210) est adaptée pour être insérée dans ladite partie de réception (230) comme un tiroir, et dans lequel la partie avant dudit tiroir constitue au moins une partie dudit cadre d'intégration (220) en tant que surface avant (221) fixée à ladite chambre d'appât (210).

4. Poste d'appât en deux parties (200) selon les revendications 1 à 3, dans lequel au moins une partie dudit cadre d'intégration (220) est fixée à ladite partie de réception (230).

5. Poste d'appât en deux parties (200) selon les revendications 1 à 4, dans lequel lesdits orifices et ouvertures d'accès sont positionnés sur de multiples côtés dudit poste d'appât en deux parties, permettant ainsi audit nuisible (10) d'accéder à la chambre d'appât (210) depuis lesdits multiples côtés dudit poste d'appât en deux parties (200).

6. Poste d'appât en deux parties (200) selon les revendications 1 à 5, dans lequel au moins deux desdites ouvertures d'accès (215) dans ladite chambre d'appât (210) sont disposées sur des parois latérales mutuellement opposées, offrant ainsi une ligne de vue depuis un côté de la chambre d'appât (215) à travers la chambre d'appât (210) jusqu'au côté opposé de la chambre d'appât (210) à travers lesdites deux ouvertures d'accès (215).

7. Poste d'appât en deux parties (200) selon les revendications 1 à 6, dans lequel lesdits au moins trois orifices et/ou au moins trois ouvertures d'accès sont prévus, ces orifices et/ou ces ouvertures d'accès étant prévus sous forme d'orifices partiellement découpés et/ou d'ouvertures d'accès partiellement découpées sous forme de découpes en pointillés ou en bande.

8. Poste d'appât en deux parties (200) selon les revendications 1 à 7, dans lequel ladite chambre d'appât (210) comprend des chambres latérales supplémentaires séparées par des parois latérales intérieures et reliées par des ouvertures dans lesdites parois latérales intérieures.

9. Poste d'appât en deux parties (200) selon les revendications 1 à 8, dans lequel des tunnels d'accès (233) sont positionnés entre au moins l'une desdites ouvertures d'accès (215) dans ladite chambre d'appât (210) et au moins une partie desdits orifices (222) dans ledit cadre d'intégration (220) pour guider le nuisible vers la chambre d'appât (210).

10. Poste d'appât en deux parties (200) selon les revendications 1 à 9, dans lequel au moins une surface de ladite chambre d'appât fermée (210) est une surface transparente (211).

11. Poste d'appât en deux parties (200) selon les revendications 1 à 10, dans lequel au moins une surface de ladite chambre d'appât fermée (210) est une surface amovible (211).

12. Poste d'appât en deux parties (200) selon les revendications 1 à 11, comprenant en outre un mécanisme de verrouillage permettant de verrouiller ladite chambre d'appât (200) sur ladite partie de réception (230), ladite chambre d'appât (210) ne pouvant être retirée de ladite partie de réception (230) qu'après avoir déverrouillé ledit mécanisme de verrouillage.

13. Poste d'appât en deux parties (200) selon l'une quelconque des revendications 1 à 12, dans lequel ledit cadre d'intégration (220) est destiné à englober au moins sensiblement ledit poste d'appât en deux parties (200), et dans lequel ledit cadre d'intégration (220) constitue au moins sensiblement l'ensemble de la surface extérieure exposée de la partie inférieure en contact avec le sol d'un objet (1), de préférence où ledit cadre d'intégration (220) englobe ledit poste d'appât en deux parties (200), et dans lequel ledit cadre d'intégration (220) constitue la surface extérieure exposée de la partie inférieure en contact avec le sol dudit objet (1).
